# EUROPÄISCHE PATENTSCHRIFT

(11) **EP 1 704 064 B1**
(45) Veröffentlichungstag und Bekanntmachung des Hinweises auf die Patenterteilung: **07.10.2015**
(21) Anmeldenummer: 05700767.6
(22) Anmeldetag: 09.01.2005
(51) Int. Cl.: B60J 7/12, B60J 7/10

(54) **SPANN-HEBEEINRICHTUNG FÜR EIN FAHRZEUGPLANENOBERTEIL**
TENSIONING AND LIFTING DEVICE
DISPOSITIF DE TENSION ET DE LEVAGE

(30) Priorität: 09.01.2004 AT 82004
(43) Veröffentlichungstag der Anmeldung: 27.09.2006
(73) Patentinhaber: Bauregger, Günter, 4702 Wallern (AT)
(72) Erfinder: Bauregger, Günter, 4702 Wallern (AT)
(74) Vertreter: Dupal, Helmut
(86) Internationale Anmeldenummer: PCT/EP2005/000119
(87) Internationale Veröffentlichungsnummer: WO 2005/065975

(56) Entgegenhaltungen:
- EP-A- 0 897 827
- DE-A1- 10 224 291
- DE-U1- 29 903 841
- FR-A- 2 742 348

## Beschreibung

Die Erfindung betrifft eine Spann-Hebeeinrichtung für ein Fahrzeugplanenoberteil von LKW und LKW-Anhängern, nach dem Oberbegriff des Anspruches 1.

Das Entfernen von Regenwasser, Schnee oder Eis vom Fahrzeugplanenoberteil einer aufgespannten Fahrzeugplane ist schwierig und zeitraubend, so dass es trotz der Notwendigkeit zur Abwendung von Gefahren für den Straßenverkehr häufig unterlassen wird oder nur unzureichend geschieht, wodurch eine erheblichen Gefährdung bestehen bleibt.

Es ist bekannt, Hebeeinrichtungen für den Planenoberteil eines Fahrzeuges vorzusehen, damit Ansammlungen von Regenwasser abfließen können und auflagernder Schnee oder Eis abgesprengt werden und abrutschen.

Eine solche Einrichtung ist aus der EP 1 523 421 B1 zu entnehmen, bei der die Abdeckplane des Fahrzeugladebereiches eines LKW's oder eines Anhängers entlang ihres Firstbereiches mit einem Blähkörper für Luft unterlegt ist, der etwa in Form eines Schlauches auf den Querspriegeln des Ladeaufbaues abstützt und von einer Bedienvorrichtung aus einer steuerbaren druckbegrenzenden Füll- und Entleerungsvorrichtung beaufschlagt wird.

Der Blähkörper ist als durchgehender Schlauch ausgebildet, der etwa aus dem gleichen Material wie die Abdeckplane bestehen kann, die auf einer Firstleiste oder auf den Querspriegeln aufliegt und an der Firstleiste mit Gurten oder Bändern gehalten ist.

Mit dieser Anordnung ist es aber schwierig und zumeist unmöglich Eis- und besonders Wasseransammlungen von einem Fahrzeugplanenoberteil sicher zu entfernen, weil dessen Breite gewöhnlich so groß, dass bei einer erreichbaren Erhöhung die Plane diese dennoch beiderseits der Mitte durchhängt oder die Zugspannung der Plane unzulässig groß wird und reißt oder aber deren Beschaffenheit durch die auftretende Zugspannung leidet.

Bei zusammenschiebbaren Verdecken besteht ein Nachteil darin, dass der Schlauch zur Erhöhung der Fahrzeugplane, bei fester Verbindung mit dieser, Verwindungen und Zugkräften ausgesetzt ist und ebenso wie die Plane nach unten in den Ladebereich durchhängt und dort störend bei der Beladung ist.

Aufgabe der Erfindung ist es, eine Spann-Hebeeinrichtung für ein Fahrzeugplanenoberteil eines Fahrzeuges, LKW oder LKW-Anhänger und Wechselbrücken zu schaffen, mit der es möglich ist diesen soweit über die Querriegel des Fahrzeugaufbaues ohne Durchhängen anzuheben, damit der Abflusswinkel für Wasser und der Gleitwinkel für Schnee und Eis soweit überschritten wird, sodass keine Reste auf dem Fahrzeugplanenoberteil verbleiben können und überdies soll die Einrichtung einer Fernsteuerung durch den Fahrer möglich und die Spann-Hebeeinrichtung auch nachträglich bei Fahrzeugplanen bzw. Fahrzeugaufbauten anzubringen sein.

Diese Aufgabe wird bei einer Spann-Hebeeinrichtung für ein Fahrzeugplanenoberteil mit den Merkmalen des kennzeichnenden Teiles des Anspruches 1 gelöst.
Die Unteransprüche, die gleichzeitig einen Teil der Beschreibung der Erfindung bilden, betreffen besonders vorteilhafte Ausgestaltungen der Erfindung.

Die Verwendung von drei oder auch noch mehreren Luftschläuchen, die an beiden Enden verschlossen sind, von denen einer mittig aufgelegt und wenigstens zwei weitere Luftschläuche, mit ausreichend geringeren Höhendurchmessern, beidseitig zwischen den Seitenkanten des Oberteils einer Fahrzeugplane angeordnet verringert erst das Durchängen ausreichend.

Eine Anordnung einer Plane, die zur Vermeidung von deren Durchhängen von drei in Firstrichtung verlaufenden Blähkörpern gehalten, ist bei einer gattungsfremden Anwendung aus dem FR 2 742 348 bekannt, bei der aber das häufige Anheben - Aufblasen und Absenken - Entleeren und daher auch die Befestigung an der Plane nicht Gegenstand der Neuerung ist.

Durch das Auflegen über die Querriegel eines Fahrzeugaufbaues werden diese als Stütze für die Hebemittel für den Oberteil einer Fahrzeugplane verwendet, wodurch sich auch bei großer Breite des Oberteils einer Fahrzeugplane eine hinreichend gleichmäßig schräge, nach außen fallende Fläche zum Abrutschen des Eises und zum Ablaufen von Wasser ergibt.

Verbunden mit einem Kompressor wie er praktisch an jedem LKW verfügbar ist, ergibt das so eine sehr schnell und sicher arbeitende Einrichtung, mit der die von Eis und Wasser auf dem Oberteil einer Fahrzeugplane ausgehende Gefährdung beseitigt wird, weil auf dieser ein ausreichender Abflusswinkel von Wasser und ein ausreichender Gleitwinkel von Eis und Schnee mit dem Oberteil der Plane überschritten werden kann.

Für das sichere Entfernen von Wasser und Eis und Schnee ist die Herstellung eines stärkeren Neigungswinkels von den seitlichen Luftschläuchen nach außen zu den Seitenkanten des Oberteils der Fahrzeugplane hin förderlich.

Für die praktische Anwendung haben sich Höhendurchmesser von etwa 150 mm beim mittigen Luftschlauch und von etwa 80 mm bei den beiden seitliche Luftschläuchen, bei Verwendung von drei Luftschläuchen, als günstig erwiesen.

Die Anbringung von Endlaschen an den Luftschläuchen, in denen jeweils eine Öse oder zwei Ösen bei größerem Durchmesser des Luftschlauches eingesetzt sind und durch die ein Gummizug geführt wird, kann eine elastische Verbindung und stabile Fixierung des Luftschlauches auf dem Fahrzeugaufbau, besonders an den Querspriegeln, hergestellt werden, die sehr einfach und wirksam ist und günstige Bedingungen für die Durchführung der Planenbehandlung durch Anheben schafft.

Eine besonders zuverlässige Befestigung der Spann-Hebeeinrichtung wird erreicht, wenn die Luftschläuche an ihren beiden verschlossenen Enden mit Endlaschen einer Längsspannbefestigung versehen sind, an denen jeweils eine oder zwei Stützplatten, dann im Abstand nebeneinander befestigt, vorzugsweise verschraubt sind, die jeweils mit einem Ringhaken versehen sind, in den ein Einhängering eines Endgummizugbandes eingehängt ist.

Dabei ist die Befestigung einfach anzubringen und zu lösen und die erforderliche Zugspannung sehr einfach einstellbar, indem das Endgummizugband am anderen Ende mit einem eingeschlauften Haken versehen, der am letzten Querspriegel eingehängt ist, wobei die Länge und die Spannung des Endgummizugbandes mit einer verstellbaren Schlaufe, in der der Ringhaken angeordnet ist, mit einer Verstellfixierung (30) festgelegt ist.

Mit der Anbringung der Luftschläuche an den Querspriegeln des Fahrzeugaufbaues durch eine Befestigung, bestehend aus einem Gummiband das über den Luftschlauch gezogen wird und mit an beiden Enden angebrachten Haken, besonders Blechhaken, beiderseits an dem zugeordneten Querspriegel eingehängt wird, erhält man über die gesamte Länge eines Luftschlauches eine elastische, einfach anzubringende und leicht lösbare Verbindung, die auch für die Nachrüstung der Einrichtung geeignet ist.

Die Anbringung der Spann-Hebeeinrichtung einerseits an der Fahrzeugplane, damit diese festgehalten wird und andereseits an den Querspriegeln ergibt eine einfach anzubringende und sehr zuverlässige nicht starre Befestigung, mit der das Aufheben und herunterlassen der Fahrzeugplane stets sicher erfolgt ohne diese zu beschädigen oder zu überlasten. Erfindungsgemäß ist das Gummizugband mit je einem Einhängering in Ringhaken einer Zugbandhalterung, zu beiden Seiten des jeweiligen, zugeordneten Querspriegels, eingehängt, wobei die Zugbandhalterung, die aus einem starren Teil aus Blech oder auch Kunststoff bestehen kann, den Querspriegel unten und seitlich, angepasst an dessen Querschnitt, umgibt und damit eine gut haltende Führung ergibt.

Nachdem das Gummizugband den Luftschlauch im entleertem und in aufgeblasenen Zustand gleicherweise halten muß, wird der Abstand der beiden Ringhaken voneinander wenigstens der Breite des zugeordneten Luftschlauches in entleertem Zustand entsprechend gewählt.

Bei fest angebrachten Fahrzeugaufbauten, die nicht zum Abnehmen bestimmt sind und besonders an solchen, bei denen die Querspriegel in einem größeren Abstand von 2m und mehr angeordnet sind, können zumeist drei Längstraglatten an den Querspriegeln befestigt werden, auf deren mittlerer Längstraglatte ein mittiger Luftschlauch und an den beiderseitigen Längstraglatten seitliche Luftschläuche, insgesamt auf drei Latten drei Luftschläuche parallel zueinander aufgelegt sind.

Eine andere Befestigungsweise besteht in der Anbringung von Schlaufen oder von Längstaschen an der Unterseite des Oberteils einer Fahrzeugplane, in denen die Luftschläuche gehalten sind, wobei die Fixierung an den Querspriegeln mit Klettverschlüssen erfolgen kann, wodurch ebenfalls eine leichte Lösbarkeit und eine freie Anordnung für ein Zusammenschieben der an den Querspriegeln angebrachten Fahrzeugplane ermöglicht wird, sodass ein Abnehmen der Plane unterbleiben kann.

Besonders die Anwendung von Luftschläuchen aus Folie oder Gummi ist wegen der Einfachheit der Herstellung und der schonenden Anwendung an der Plane günstig. Die elastischen Eigenschaften der Luftschläuche ermöglichen eine sehr einfache Bedienbarkeit beim Aufblasen bis zur Überschreitung des Abflusswinkels oder des Gleitwinkels für Schnee oder Eisbeläge an dem Fahrzeugplanenoberteil.

Besonders einfach ist die Verwendung und Anbringung eines Luftschlauches mit im aufgeblasenen unbelasteten Zustand kreisförmigen Durchmesser.

Mechanisch günstig ist es, wenn der Luftschlauch in den Fahrzeugplanenoberteil an der Unterseite eingebettet oder eingeschweißt oder daran durch Klebung befestigt wird, wobei die Herstellung aus Bahnen, die angeklebt oder anvulkanisiert werden eine einfache Ausführungsform ergibt.

Für die Handhabung der Einrichtung zusammen mit einer aufgelegten Fahrzeugplane ist es vorteilhaft, diese zusammen mit den Luftschläuchen in Längsrichtung zusammenfaltend zusammenschiebbar herzustellen und anzubringen.
Dabei kann die Anwendung von Klettverschlüssen bei Schiebeverdecken für die einfache Handhabung günstig sein.

Besonders zuverlässig ist eine Anordnung, bei der die Luftschläuche der Spann-Hebeeihrichtung bei einem Schiebeverdeck von Seilen gehalten sind, die zwischen den Querspriegeln parallel zu diesen ausgespannt sind und beiderseits in jeweils seitlich zwischen den Querspriegeln eingesetzten, nach oben gelenkig zusammenfaltenden Planenhaltern eingehängt sind und dadurch die Fahrzeugplane und die Luftschläuche zusammengefaltet über den Querspriegeln halten.

Zur Einspeisung und Entleerung der Luft ist wenigstens ein Schlauchanschluß, günstiger Weise an einem Ende eines jeden Luftschlauch vorzusehen, deren Zuleitungen zu einer flexiblen Luftschlauchleitung zusammengefaßt, die Verbindung zum Kompressor und dessen Armaturen herstellen.

In die Verbindung zum Kompressor wird günstigerweise ein von der Fernsteuerung gesteuertes Dreiwegventil eingeschaltet, das entweder zum Aufblasen des Luftschlauches die Verbindungsleitung zum Kompressor öffnet und die Öffnung zur freien Luft schließt oder auch die Verbindungsleitung zum Kompressor hin absperrt und zum Erhalten des Druckes in den Luftschläuchen bei Druckabfall öffnet oder aber zum Entleeren der Luftschläuche die Luftschlauchleitung über das Dreiwegventil mit der freien Luft verbindet und die Verbindungsleitung zum Kompressor hin abgesperrt. Die Beeinflussung der Fernsteuerung geschieht dabei mit einem oder mehreren Druckschaltern, wie unten erläutert.

Für die Einfachheit der Bedienung ist es wichtig, daß diese Spann-Hebeeinrichtung mit einer Fernsteuervorrichtung für Kompressor und Dreiwegventil für das Aufblasen und das Entleeren der Luftschläuche versehen werden kann.
Eine besonders einfache und für den gedachten Zweck genügende Anordnung wird dadurch hergestellt, dass das Dreiwegeventil mit einem Gestänge oder einer Zugeinrichtung mechanisch schaltbar eingerichtet ist.

Für die Herstellung und Aufrechterhaltung eines aufgeblasenen oder entleerten Zustandes der Luftschläuche und für den Schutz der Luftschläuche und der Plane ist ein Druckschalter für jeden Luftschlauch vorgesehen oder wenigstens ein Druckschalter insgesamt, mit denen oder dem die Fernsteuervorrichtung elektrisch verbunden ist. Dabei ist der Druckschalter pneumatisch mit einer im Durchmesser, insbesondere an den Fülldruck und den Druckabfall beim Füllen oder dem Entleeren, angepasste Fühlleitung an dem oder den Schlauchanschlüssen der Luftschläuche verbunden.

An Stelle eines Dreiwegeventils können gleichwirkend auch zwei pneumatisch hintereinander geschaltete Magnetventile in der Verbindungsleitung des Kompressors angebracht sein, von denen das Nächste pneumatisch mit der Luftschlauchleitung verbunden und stromlos zu ist und das Zweite zur freien Luft hin stromlos offen ist und die beide über die Fernsteuerung von wenigstens einem Druckschalter gesteuert sind, womit alle Betriebszustände hergestellt werden können.

Die Fernsteuervorrichtung wird auf die Betriebszustände "Alles aus", "Aufblasen - Abblasen" zum Brechen von Eisplatten, und "Aufblasen und Belassen" für das Abstellen, insbesondere bei Nacht, eingerichtet, um eine einfache und rasche Bedienung zu erhalten.
Von großem Vorteil ist es, wenn die Luftschläuche elastisch sind und zusammen mit der flexiblen Luftschlauchleitung mit der Fahrzeugplane, d.h. mit dem Fahrzeugplanenoberteil in Falten zusammenschiebbar sind.

Die Erfindung wird an Hand der Zeichnung einer AusführungsForm mit zwei Varianten beschrieben.
Es zeigt:
- Fig.1: einen LKW- Fahrzeugaufbau, in Schrägansicht ohne Plane, schematisch;
- Fig.2: einen Querschnitt durch den Fahrzeugaufbau nach Fig.1 mit aufgelegter Plane, schematisch;

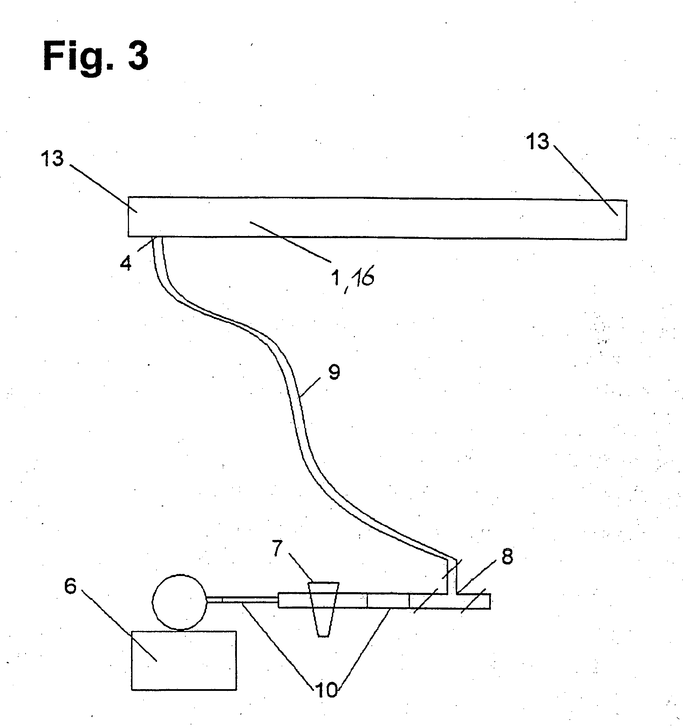

- Fig.3: ein Anordnungsschema für eine Spann-Hebeeinrichtung eines Fahrzeugplanenoberteiles mit den Vorrichtungen für deren Betreiben;
- Fig.4: einen Ausschnitt aus dem Mittelteil des Querschnittes durch den Fahrzeugaufbau mit aufgelegter Plane nach Fig.2 mit einer abgewandelten Schlauch- und Planenbefestigung, schematisch;
- Fig.5: einen Längsschnitt in Schlauchrichtung durch den Ausschnitt nach Fig.4, schematisch;
- Fig.6: Ausschnitt aus der Unteransicht eines Endes der Plane nach Fig.1 mit einer abgewandelten Planenbefestigung, schematisch;
- Fig.6a: Teilausschnitt durch das Ende der Planenbefestigung nach Fig.6.

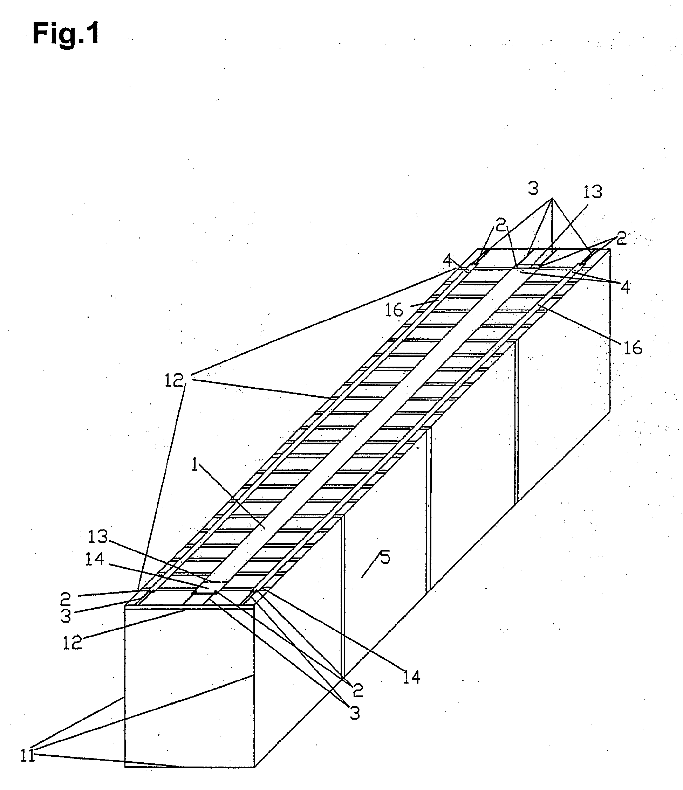

In Fig. 1 ist ein Fahrzeugaufbau 11 dargestellt, an dessen Oberseite in kurzen Abständen Querspriegel 12 den Abschluß bilden, auf dem das Fahrzeugplanenoberteil 15 der Fahrzeugplane 5 aufliegt.

Auf dem Querspriegel 12 sind in Längsrichtung des Fahrzeugaufbaues 11 drei Luftschläuche 1, 16 ausgelegt, von denen in der Mitte ein Luftschlauch 1 mit größerem Höhendurchmesser angebracht ist und beiderseits zu den Seitenkanten des Fahrzeugaufbaues 11 hin, zwei weitere Luftschläuche 16 mit wesentlich geringerem Höhendurchmesser, parallel verlaufend angebracht sind.

Jeweils an den beiden verschlossenen Enden 13 des Luftschlauches 1 sind Endlaschen 14 angebracht, in denen jeweils zwei Ösen 2 eingesetzt sind, während bei den seitlichen Luftschläuchen mit geringerem Durchmesser mit einer Öse das Auslangen gefunden wird. Durch die Ösen 2 ist beiderseits je ein Gummizug 3 gezogen und jeweils an dem letzten Querspriegel 12 unter Längszug befestigt.

An einem Ende eines jeden Luftschlauches 1, 16 ist ein Schlauchanschluß 4 angebracht.

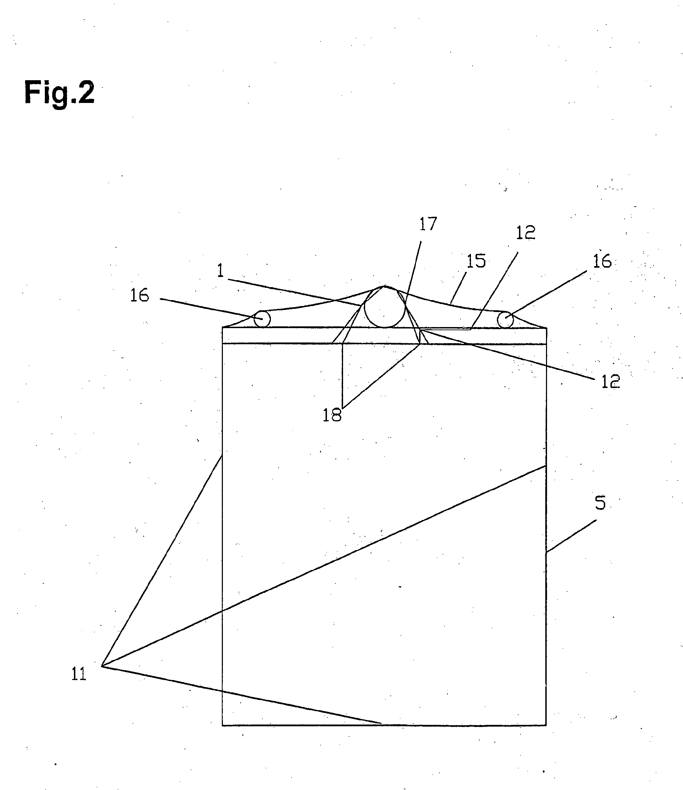

In Fig.2 ist ersichtlich, daß der Luftschläuche 1 und 16 in aufgeblasenen und unbelasteten Zustand einen kreisförmigen Querschnitt aufweisen, wobei der mittige Luftschlauch 1 einen nahezu doppelt so großen Durchmesser aufweist als die beiden seitlich zwischen diesem und den Seitenkanten des Fahrzeugaufbaues 11 parallel ausgerichteten Luftschläuche 16, die soweit zu diesen angenähert sind, daß zu den Seitenkanten ein stärkerer Neigungswinkel hergestellt ist als von der Mitte her.

An den Querspriegeln 12 sind die Luftschläuche 1, 16 mit einem Gummizugband befestigt, das mit beiderseits angebrachten Haken an dem zugeordneten Querspriegel fixiert ist.

Die Luftschläuche 1, 16 spannen in aufgeblasenem Zustand den Fahrzeuplanenoberteil 15 von den Querspriegeln 12 hoch, so daß eine schiefe Ebene entsteht mit einem ausreichenden Abfluß- und Gleitwinkel für Wasser, Schnee und Eis.

An die Schlauchanschlüsse 4 der Luftschläuche 1 und 16 sind Anschlußleitungen angebracht, die mit einer flexiblen Luftschlauchleitüng 9 zusammengefaßt sind, die an ein Dreiwegeventil 8 am Kompressor 6 angeschlossen ist, das über einen Teil einer Verbindungsleitung 10 mit einem Druckminderventil 7 verbunden ist das wiederum über den anderen Teil der Verbindungsleitung 10 an den Druckbehälter des Kompressors 6 angeschlossen ist.

Zum Aufblasen der Luftschläuche 1, 16 wird die Druckluft des Kompressors 6 durch die Luftschlauchleitung 9 in die Luftschläuche 1, 16 geleitet, während die Öffnung des Dreiwegeventils 8 zur freien Luft hin abgesperrt ist.

Beim Entleeren der Luftschläuche 1, 16 wird die Luftschlauchleitung 9 über das Dreiwegventil 7 zu der freien Luft hin geöffnet und die Verbindungsleitung 10 zum Kompressor abgesperrt.

Die Steuerung von Kompressor und Dreiwegventil kann mit einer nicht dargestellten Fernsteuereinrichtung vom Führerhaus des LKW's geschehen, wobei die Steuerschaltung in einem Schaltschrank eingebaut ist, an die ein Druckschalter oder für jeden Luftschlauch 1, 16 ein gesonderter Druckschalter angeschlossen ist.

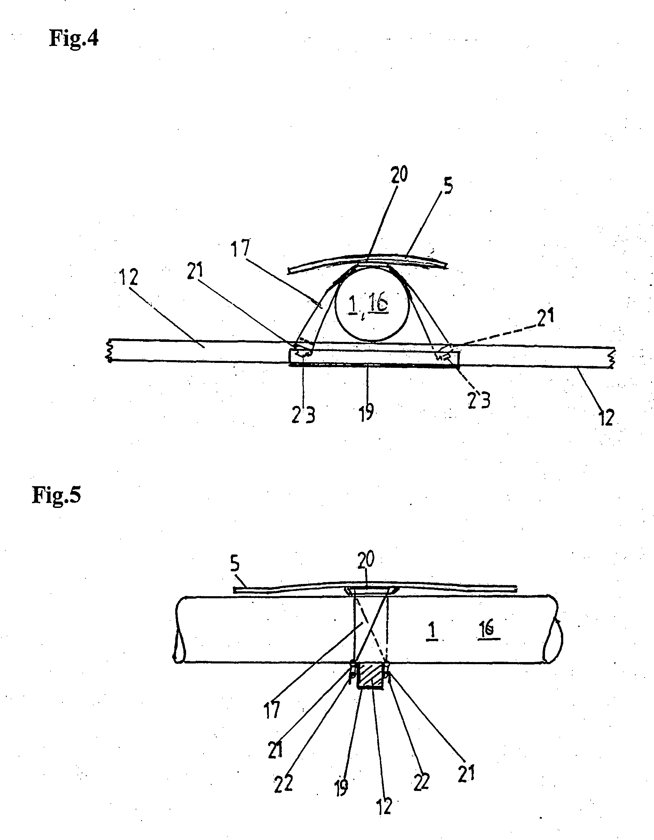

In Fig.4 und 5 ist eine abgewandelte Form der Schlauch- und Planenbefestigung dargestellt. An der Unterseite der Fahrzeugplane 5 ist über dem zugeordneten Luftschlauch 1, 16 eine Durchzuglasche 20 angebracht, durch die das Gummizugband 17 gezogen ist.

Das Gummizugband 17 ist an beiden Enden mit je einem Einhängering 21, in einer Schlaufe eingenäht versehen, mit dem es beiderseits des zugeordneten Luftschlauches 1, 16 in je einen Ringhaken 22 einer Zugbandhalterung 19 eingehängt wird.

Die Zugbandhalterung 19 besteht aus einem an den Querschnitt des Querriegels 12 des Fahrzeugaufbaues 11 angepassten aus steifem Material, wie Blech, der den Querriegel 12 dreiseitig von unten umgibt und eine Länge zwischen den Ringhaken 22 besitzt, die die Breite des zugeordneten Luftschlauches 1, 16 zumindest etwas übersteigt.
Die Ringhaken 22 sind in dabei in Ausnehmungen 23 der Zugbandhalterung 19 nach außen schräg nach unten gekrümmt geformt angebracht.

Diese Befestigung stellt sicher, dass Luftschlauch 1, 16 und Fahrzeugplane in enger Zuordnung beim Ein- und Abblasen der Luft bleiben.

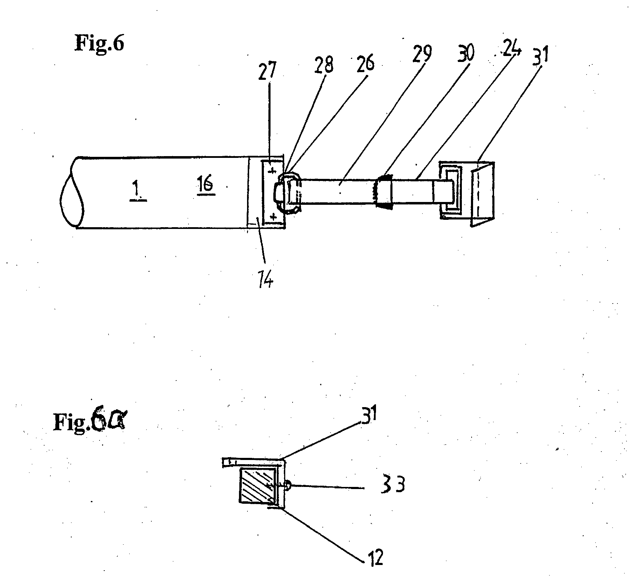

Eine abgewandelte Form der Längsspannbefestigung des Luftschlauches 1, 16 ist in Fig. 6 und 6a wiedergegeben.
An der Endlasche 14 des Luftschlauches 1, 16 ist eine Stützplatte 27 mit Verschraubungen befestigt, an der nach unten weisend ein Ringhaken 28 eingearbeitet ist, in den ein Einhängering 26 eingehängt wird, der in einer Schlaufe 29 eines Endgummizugbandes 24 eingesetzt ist.

Am anderen Ende des Endgummizugbandes 24 ist ein nach unten weisend abgewinkelter Haken 31 eingeschlauft, der am letzten Querriegel 12 eingehängt und mit einer Verschraubung 32 gesichert ist.
Zur Herstellung der Zugspannung ist die Schlaufe des Einhängeringes 26 verstellbar und mit einer lösbaren Verstellfixierung 30 einstellbar ausgebildet.

### Legende

- 1: mittiger Luftschlauch einer Spann-Hebeeinrichtung
- 2: Öse
- 3: Gummizug
- 4: Schlauchanschluß
- 5: Fahrzeugplane
- 6: Kompressor
- 7: Druckminderventil
- 8: Dreiwegeventil
- 9: Luftschlauchleitung
- 10: Verbindungsleitung zwischen Dreiwegeventil 8, Druckminderventil 7 und Kompressor 6
- 11: Fahrzeugaufbau
- 12: Querriegel bzw. Querspriegel des Fahrzeugaufbaues 11
- 13: verschlossenes Ende des Luftschlauches 9
- 14: Endlasche des Luftschlauches 9
- 15: Fahrzeugplanenoberteil
- 16: seitlicher Luftschlauch
- 17: Gummizugband
- 18: Haken des Gummizugbandes 17
- 19: Zugbandhalterung
- 20: Durchzuglasche der Fahrzeugplane 5
- 21: Einhängering des Gummizugbandes 17
- 22: Ringhaken der Zugbandhalterung 19
- 23: Ausnehmung der Zugbandhalterung'19 für den Ringhaken 22
- 24: Endgummizugband
- 25:
- 26: Einhängering des Endgummizugbandes 24
- 27: Stützplatte für das Endgumizugband 24 an der Endlasche 14 der Längsspannbefestigung des Luftschlauches 1, 25
- 28: Ringhaken der Stützplatte 27 für den Einhängering 26
- 29: Schlaufe des Endgummizugbandes 24
- 30: Verstellfixierung der Schlaufe 29
- 31: Haken des Endgummizugbandes 24 für den Querriegel 12
- 32: Verschraubung des Hakens 31 am Querriegel 12

## Patentansprüche

1. Spann-Hebeeinrichtung für ein Fahrzeugplanenoberteil von LKW und LKW-Anhängern oder Wechselbrücken, mit einem Luftschlauch (1), der unter dem Fahrzeugplanenoberteil (15) einer Fahrzeugplane (5) mittig und ausgerichtet in Fahrzeuglängsrichtung, auf den Querspriegeln (12) eines Fahrzeugaufbaues (11) eines LKWs aufgelegt ist, allseitig verschlossen und mit einem Kompressor (6) zum Aufblasen und mit der freien Luft zum Entleeren verbindbar ist und aus Kunststoff als Folienschlauch oder aus Gummi oder aus beschichteten Planengewebe oder Starktextiliengewebe hergestellt ist, **dadurch gekennzeichnet, dass** wenigstens zwei weitere Luftschläuche(16) beiderseits des mittigen Luftschlauches (1) im wesentlichen parallel ausgerichtet angeordnet sind, deren Durchmesser in Vertikalrichtung im aufgeblasenen Arbeitszustand aller Luftschläuche (1, 16) in einem Ausmaß geringer ist, als jener des mittigen Luftschlauches (1) und dem Fahrzeugplanenoberteil (15) zumindest einen gleichmäßigen Neigungswinkel ergibt, bei dem der Fahrzeugplanenoberteil (15) der Fahrzeugplane (5) den Abflusswinkel für Wasser und den Gleitwinkel für Schnee und Eis wenigstens etwas überschreitet, wobei die Luftschläuche (1, 16) der Spann-Hebeeinrichtung jeweils an den Querspriegeln (12), mit einem über die Luftschläuche (1, 16) greifenden Gummizugband (17) versehen sind, das an der Fahrzeugplane (5) durchgezogen durch eine an dieser befestigten Durchzuglasche (20) befestigt ist und das Gummizugband (17) mit je einem Einhängering (21) in Ringhaken (22) einer Zugbandhalterung (19) zu beiden Seiten des zugeordneten Querspriegels (12) eingehängt ist und wobei die Zugbandhalterung (19) den Querspriegel unten und seitlich, an dessen Querschnitt angepasst, umgibt und die Luftschläuche (1, 16) an ihren beiden verschlossenen Enden (13) mit Endlaschen (14) versehen sind, in die jeweils mehrere Ösen (2) eingesetzt sind, durch die beiderseits je ein Gummizug (3) gezogen ist, mit denen die Luftschläuche (1, 16) der Spann-Hebeeinrichtung an beiden letzten Querspriegeln (12) des Fahrzeugaufbaues (11) unter Längszug befestigbar sind.

2. Spann-Hebeeinrichtung nach dem vorhergehenden Anspruch, **dadurch gekennzeichnet, dass** die beiden äußeren Luftschläuche (16) in Abhängigkeit von ihrem Durchmesser in einem Abstand zu dem mittigen Luftschlauch (1) angeordnet sind, bei dem der Fahrzeugplanenoberteil zu den Seitenkanten der Fahrzeugplane (5) hin einen stärkeren Neigungswinkel aufweist als von der Mitte her.

3. Spann-Hebeeinrichtung nach Anspruch 1 oder 2, **dadurch gekennzeichnet, dass** die Luftschläuche (1, 16) an ihren beiden verschlossenen Enden (13) mit Endlaschen (14) versehen sind, an denen jeweils eine oder zwei Stützplatten (27) einer Längsspannbefestigung befestigt, vorzugsweise verschraubt, sind die jeweils mit einem Ringhaken (28) versehen sind, in den ein Einhängering (26) eines Endgümmizugbandes (24) eingehängt ist.

4. Spann-Hebeeinrichtung nach einem der Ansprüche 1 oder 2, **dadurch gekennzeichnet, dass** das Endgummizugband (24) am anderen Ende einen Haken (31) eingeschlauft hat, der am letzten Querspriegel (12) eingehängt ist, wobei die Länge und die Spannung des Endgummizugbandes (24) mit einer verstellbaren Schlaufe (29), in der der Ringhaken (28) angeordnet ist, mit einer Verstellfixierung (30) festgelegt ist.

5. Spann-Hebeeinrichtung nach einem der Ansprüche 1 bis 4, **dadurch gekennzeichnet, dass** der Abstand der beiden Ringhaken (22) voneinander wenigstens der Breite des zugeordneten Luftschlauches (1, 16) in entleerten Zustand entspricht.

6. Spann-Hebeeinrichtung nach einem der Ansprüche 1 bis 5, **dadurch gekennzeichnet, dass** die Luftschläuche (1, 16) unter dem Fahrzeugplanenoberteil (15) einer Fahrzeugplane (5), in Fahrzeuglängsrichtung ausgerichtet, auf einer mittigen und mehreren seitlichen Längstraglatten aufgelegt sind, die an den Querspriegeln (12) eines festen, nicht zum Abnehmen bestimmten Fahrzeugaufbaues, wie auf denen eines LKW-Aufbaues angeordnet sind.

7. Spann-Hebeeinrichtung nach einem der Ansprüche 1 bis 6, **dadurch gekennzeichnet, dass** die Luftschläuche (1, 16) der Spann-Hebeeinrichtung in aufgeblasenem Arbeitszustand einen kreisförmigen Querschnitt aufweisen.

8. Spann-Hebeeinrichtung nach einem der Ansprüche 1. bis 7, **dadurch gekennzeichnet, dass** die Luftschläuche (1) zusammen mit dem Fahrzeugplanenoberteil (15) bzw. mit der Fahrzeugplane (5) in der Längsrichtung des Fahrzeugaufbaues (11) zusammenfaltend zusammenschiebbar ausgebildet sind.

9. Spann-Hebeeinrichtung nach, nach Anspruch 8, **dadurch gekennzeichnet, dass** die Luftschläuche (1, 16) der Spann-Hebeeinrichtung bei einem Schiebeverdeck mit Klettverschlüssen befestigt sind.

10. Spann-Hebeeinrichtung nach Anspruch 9, **dadurch gekennzeichnet, dass** die Luftschläuche (1, 16) der Spann-Hebeeinrichtung bei einem Schiebeverdeck von Seilen gehalten sind, die zwischen den Querspriegeln (12) parallel zu diesen ausgespannt sind und beiderseits in jeweils seitlich zwischen den Querspriegeln (12) eingesetzten, nach oben gelenkig zusammenfaltenden Planenhaltern eingehängt sind und die Fahrzeugplane (5) zusammengefaltet über den Querspriegeln (12) halten.

11. Spann-Hebeeinrichtung nach einem der Ansprüche 1 bis 10, **dadurch gekennzeichnet, dass** jeder Luftschlauch (1, 16) zumindest an einem Ende (13) mit einem Schlauchanschluß (4) für eine Luftschlauchleitung (9) zur Verbindung mit dem Kompressor (6) versehen ist.

12. Spann-Hebeeinrichtung nach einem der Ansprüche 1 bis 11, **dadurch gekennzeichnet, dass** die Luftschläuche (1, 16) an ein Dreiwegeventil (8) über Luftschlauchleitungen (9) angeschlossen sind, die die Luftschläuche (1, 16) entweder über eine Verbindungsleitung (10) mit einem Druckminderventil (7) und weiter mit dem Kompressor (6) zum Aufblasen oder mit der freien Luft zum Entleeren der Luft verbindet und das Dreiwegeventil (8) insbesonders mechanisch schaltbar eingerichtet ist.

13. Spann-Hebeeinrichtung nach einem der Ansprüche 1 bis 12, **dadurch gekennzeichnet, dass** die Spann-Hebeeinrichtung mit einer Fernsteuervorrichtung versehen ist, mit der der Kompressor (6) und/oder Dreiwegeventil (8) zum Aufblasen oder Entleeren der Luft steuerbar sind.

14. Spann-Hebeeinrichtung nach Anspruch 13, **dadurch gekennzeichnet, dass** die Spann-Hebeeinrichtung mit einer Fernsteuervorrichtung versehen ist, die mit einem Druckschalter an jedem Luftschlauch (1, 16), wenigstens aber mit einem Druckschalter für alle Luftschläuche (1 und 16), schaltbar ist.

15. Spann-Hebeeinrichtung nach Anspruch 12, 13, oder 14, **dadurch gekennzeichnet, dass** die Fernsteuervorrichtung zumindest auf die Betriebszustände "Alles aus", "Aufblasen - Abblasen" zum Brechen von Eisplatten, und "Aufblasen und Belassen" für das Abstellen, insbesondere bei Nacht, eingerichtet ist

## Claims

1. Tensioning and lifting mechanism for the upper part of a vehicle tarpaulin for trucks, truck trailers or swap bodies, said device comprising an air hose (1) which is centrally arranged beneath the upper part (15) of a vehicle tarpaulin (5) in such a way that it is oriented in the longitudinal direction of the vehicle, on the transversal bows (12) of the vehicle superstructure (11) of a truck, closed on all sides, and can be connected to a compressor (6) for inflation and to free air for emptying, and is manufactured from plastic as a film tube or from rubber or from coated tarpaulin material or robust textile fabric, which is **characterized in that** at least two other air hoses (16) are arranged on both sides of the central air tube (1), essentially parallel thereto, the diameter of said two other air hoses being smaller to some extent, in the vertical direction in the inflated working state of all air hoses (1, 16), than that of the central air hose (1), and providing the upper part (15) of the vehicle tarpaulin with at least one constant angle of inclination, enabling said upper part (15) of the tarpaulin (5) to at least somewhat exceed the flow angle for water and the gliding angle for snow and ice, the air hoses (1, 16) of the tensioning and lifting mechanism being at the transversal bows (12) provided with an elastic strap (17) spanning the air hoses (1, 16) which is pulled through a pulling tab (20) attached to the vehicle tarpaulin (5), and the elastic strap (17) is mounted using a scaffold mounting ring (21) in ring bolts (22) of a pull strap holder (19) on both sides of the assigned transversal bow (12) and the pull strap holder (19) encloses the transversal bow below and laterally - adapted to its cross section - and the air hoses (1, 16) are at both of their closed ends (13) provided with end flaps (14) into each of which several loops (2) have been inserted through both sides of which an elastic strap (3), by which the air hoses (1,16) of the tensioning and lifting mechanism can be attached lengthwise on both of the final transversal bows (12) of the vehicle superstructure (11), has been pulled.

2. Tensioning and lifting mechanism according to the preceding claim, which is **characterized in that** both exterior air hoses (16) are depending on their diameter arranged at a distance from the central air hose (1) whereby the inclination angle from the upper part of the vehicle tarpaulin to the lateral edges of the vehicle tarpaulin (5) is steeper than from the centre.

3. Tensioning and lifting mechanism according to claim 1 or 2, which is **characterized in that** the air hoses (1, 16) are at both of their closed ends (13) provided with end flaps (14) at which one or two support plates (27) of a longitudinal clamp fastening which are provided with a ring bolt (28), into which a scaffold mounting ring (26) of an elastic end strap (24) is inserted, are attached or preferably screwed.

4. Tensioning and lifting mechanism according one of the claims 1 or 2, which is **characterized in that** the elastic end strap (24) has attached a hook (31) which is inserted at the final transversal bow (12) at the other end, the length and tension of the elastic end strap (24) being defined using an adjustable loop (29) in which the ring bolt (28) is mounted, and using an adjustable fixation (30).

5. Tensioning and lifting mechanism according to one of the claims 1 to 4, which is **characterized in that** the distance of the two ring bolts (22) from each other at least corresponds to the width of the attributed air hose (1, 16) in an emptied condition.

6. Tensioning and lifting mechanism according to one of the claims 1 to 5, which is **characterized in that** the air hoses (1, 16) are positioned beneath the upper part (15) of a vehicle tarpaulin (5) - oriented in the longitudinal direction of the vehicle - on one central longitudinal supporting lath and several lateral, longitudinal supporting laths which are arranged at the transversal bows (12) of a solid vehicle superstructure which is not intended for dismantling, similar to the transversal bows of a truck superstructure.

7. Tensioning and lifting mechanism according to one of the claims 1 to 6, which is **characterized in that** the air hoses (1, 16) of the tensioning and lifting mechanism have a circular cross section when being in an inflated working state.

8. Tensioning and lifting mechanism according to one of the claims 1 to 7, which is **characterized in that** the air hoses (1) are designed to be pushed together to fold up with the upper part (15) of the vehicle tarpaulin or with the vehicle tarpaulin (5) in the longitudinal direction of the vehicle superstructure (11).

9. Tensioning and lifting mechanism according to claim 8, which is **characterized in that** the air hoses (1, 16) of the tensioning and lifting mechanism are, in case of a sliding cover, fixed using Velcro fasteners.

10. Tensioning and lifting mechanism according to claim 9, which is **characterized in that** the air hoses (1, 16) of the tensioning and lifting mechanism are, in case of a sliding cover, suspended by ropes which are tightened between the transversal bows (12) parallel to those and are attached on both sides to tarp holders folding together over upward moving joints which are inserted laterally between the transversal bows (12) and which hold the vehicle tarpaulin (5) by being folded over the transversal bows (12).

11. Tensioning and lifting mechanism according to one of the claims 1 to 10, which is **characterized in that** every air hose (1, 16) is on at least one end (13) provided with a hose connection (4) for an air hose line (9) to be connected to the compressor (6).

12. Tensioning and lifting mechanism according to one of the claims 1 to 11, which is **characterized in that** the air hoses (1, 16) are connected to a three-way valve (8) via air hose lines (9) which connect the air hoses (1, 16) either via a connecting line (10) to a pressure reduction valve (7) and further to the compressor (6) for inflation or to free air for emptying the air, and that the three-way valve (8) is designed in a way that it can, in particular, be switched mechanically.

13. Tensioning and lifting mechanism according to one of the claims 1 to 12, which is **characterized in that** the tensioning and lifting mechanism is provided with a remote control device by means of with the compressor (6) and/or the three-way valve (8) for inflation or emptying the air can be controlled.

14. Tensioning and lifting mechanism according to claim 13, which is **characterized in that** the tensioning and lifting mechanism is provided with a remote control device which is switchable by means of a pressure switch on every air hose (1, 16), at least by means of one pressure switch for all air hoses (1 and 16).

15. Tensioning and lifting mechanism according to claim 12, 13 or 14 which is **characterized in that**, as a minimum, the operating modes "Everything off", "Inflate-deflate" for breaking ice plates and "Inflate and leave in this position" for turning the vehicle off, in particular at night, are set up on the remote control device.

## Revendications

1. Dispositif de tension et de levage destiné à la partie supérieure d'une bâche de véhicule, notamment pour des camions, des remorques de camions ou des ponts interchangeables, le dispositif comprenant un tuyau flexible à air (1), qui est placé sous la partie supérieure (15) d'une bâche de véhicule (5), au centre et dans le sens de la longueur du véhicule, notamment sur les arceaux transversaux (12) du corps (11) d'un camion, le tuyau flexible à air étant fermé de tous les côtés et pouvant être relié à un compresseur (6) servant à le gonfler, ainsi qu'à l'air libre pour pouvoir être vidé, le tuyau flexible étant constitué d'une feuille de matière plastique ou de caoutchouc, ou d'un matériau de bâche enduit, ou d'un tissu textile rigide, **caracterisé par le fait qu'**au moins deux autres tuyaux flexibles à air (16) sont placés sur les deux côtés de ce tuyau flexible à air central (1), de façon sensiblement parallèle, le diamètre de ces tuyaux flexibles à air complémentaires, dans le sens vertical, lorsque tous les tuyaux flexibles à air (1, 16) sont à l'état de fonctionnement gonflé, étant plus petit, dans une certaine mesure, que celui du tuyau flexible à air central (1), et confère à la partie supérieure (15) de la bâche de véhicule au moins un angle d'inclinaison régulier, cet angle permettant à la partie supérieure (15) de la bâche de véhicule (5) de dépasser, dans un certaine mesure, l'angle l'écoulement pour l'eau, et l'angle de glissement pour la neige et la glace, les tuyaux flexibles à air (1, 16) du dispositif de tension et de levage étant aux arceaux transversaux (12) pourvus d'une bande élastique de traction (17) s'étendant sur les tuyaux flexibles à air (1, 16) qui est tirée par une languette à tirer attachée à la bâche de véhicule (5), et la bande élastique de traction (17) est accrochée sur tous les deux côtés de l'arceau transversal (12) attribué par un anneau de fixation (21) dans un crochet à vis (22) d'un support de la bande de traction (19), et le support de la bande de traction (19) entoure l'arceau transversal en bas et latéralement - adapté à sa section transversale - et les tuyaux flexibles à air (1,16) sont à leurs deux extrémités fermées (13) pourvus des éclisses finales (14), dans chaque desquelles plusieurs oeillets (2) étant sur chaque côté traversés par une bande élastique (3) qui permet d'attacher les tuyaux flexibles à air (1, 16) du dispositif de tension et de levage aux deux derniers arceaux transversaux (12) du corps du véhicule (11) sous traction longitudinale, sont insérés.

2. Dispositif de tension et de levage selon la revendication précédente, **caractérisé par le fait que** les deux tuyaux flexibles à air extérieurs (16) sont en fonction de leur diamètre placés à une distance du tuyau flexible à air central (1), permettant à la partie supérieure de la bâche de véhicule de présenter un angle d'inclinaison plus prononcé vers les arrêtes latérales de la bâche du véhicule (5) que du centre.

3. Dispositif de tension et de levage selon la revendication 1 ou 2, **caractérisé par le fait que** les tuyaux flexibles à air (1,16) sont à leurs extrémités fermées (13) pourvus des éclisses finales (14) à chacune desquelles une ou deux plaques d'appui (27) d'une fixation par serrage longitudinale étant pourvues d'un crochet à vis (28) dans lequel un anneau de fixation (26) d'une bande élastique de traction terminale (24) est accroché, sont attachées ou, de préférence, vissées.

4. Dispositif de tension et de levage selon l'une des revendications 1 ou 2, **caractérisé par** le faitque la bande élastique de traction terminale (24) a fixé un crochet (31) à l'autre extrémité étant accroché au dernier arceau transversal (12), dont la longueur et la tension de la bande élastique de traction terminale (24) sont définies en utilisant une boucle ajustable (29) dans laquelle le crochet à vis (28) est placé, et au moyen d'une fixation réglable (30).

5. Dispositif de tension et de levage selon l'une des revendications 1 jusqu'à 4, **caractérisé par le fait que** la distance des deux crochets à vis (22) l'un de l'autre correspond au moins à la largeur du flexible à air (1, 16) attribué dans l'état vide.

6. Dispositif de tension et de levage selon l'une des revendications 1 jusqu'à 5, **caractérisé par le fait que** les flexibles à air (1, 16) sont mis sous de la partie supérieure (15) d'une bâche de véhicule (5) - orientés dans le sens de la longueur du véhicule - sur une latte porteuse longitudinale centrale et plusieurs lattes porteuses longitudinales latérale qui sont positionnées sur les arceaux transversaux (12) d'un corps de véhicule solide n'étant pas destiné à être démonté, de même que sur les arceaux transversaux du corps d'un camion.

7. Dispositif de tension et de levage selon l'une des revendications 1 jusqu'à 6, **caractérisé par le fait que** les flexibles à air (1, 16) du dispositif de tension et de levage présentent à l'état de fonctionnement gonflé une section transversale circulaire.

8. Dispositif de tension et de levage selon l'une des revendications 1 jusqu'à 7, **caractérisé par le fait que** les tuyaux flexibles à air (1, 16) sont conçus de manière télescopique et pliable avec la partie supérieure (15) d'une bâche de véhicule ou avec la bâche de véhicule (5) dans le sens de la longueur du corps du véhicule (11).

9. Dispositif de tension et de levage selon la revendication 8, **caractérisé par le fait que** les tuyaux flexibles à air (1, 16) du dispositif de tension et de levage sont dans le cas d'un toit coulissant attachés en utilisant des fermetures Velcro.

10. Dispositif de tension et de levage selon la revendication 9, **caractérisé par le fait que** les tuyaux flexibles à air (1, 16) du dispositif de tension et de levage sont dans le cas d'un toit coulissant tenus par des cordes étant déployées entre les arceaux transversaux (12) parallèlement à ceux-ci et étant sur tous les deux côtés accrochées à des fixations de bâches pliées vers le haut d'une manière articulée et insérées latéralement entre les arceaux transversaux (12) et supportant la bâche de véhicule (5) de façon pliée au-dessus des arceaux transversaux (12).

11. Dispositif de tension et de levage selon l'une des revendications 1 jusqu'à 10, **caractérisé par le fait que** chaque tuyau flexible à air (1, 16) est pour le moins à une extrémité pourvu d'un raccord de tuyau (4) pour une conduite en tuyaux flexibles à air (9) destinée être reliée au compresseur (6).

12. Dispositif de tension et de levage selon l'une des revendications 1 jusqu'à 11, **caractérisé par le fait que** les tuyaux flexibles à air (1, 16) sont branchés à une soupape à trois orifices (8) via des conduites en tuyaux flexibles à air (9) reliant les tuyaux flexibles à air (1, 16) via une ligne de raccordement (10) à une soupape réductrice (7) et, en outre, au compresseur (6) servant à les gonfler ou à l'air libre pour vider l'air, et que la soupape à trois orifices (8) est configurée de manière qu'elle peut, en particulier, être commutée mécaniquement.

13. Dispositif de tension et de levage selon l'une des revendications 1 jusqu'à 12, **caractérisé par le fait que** le dispositif de tension et de levage est pourvu d'un dispositif de télécommande qui permet de commander le compresseur (6) et/ou la soupape à trois orifices (8) pour gonfler ou vider l'air.

14. Dispositif de tension et de levage selon la revendication 13, **caractérisé par le fait que** le dispositif de tension et de levage est pourvu d'un dispositif de télécommande qui est commutable par un interrupteur à poussoir sur chaque tuyau flexible à air (1, 16) ou, pour le moins, par un interrupteur à poussoir pour tous les tuyaux flexibles à air (1 et 16).

15. Dispositif de tension et de levage selon les revendications 12, 13 ou 14, marqué par le fait que le dispositif de télécommande est au moins configuré pour les états opérationnels "Débrayer tout", "Gonfler - dégonfler" pour casser des plaques de glaces et confier et laisser dans cet état" pour arrêter le véhicule, surtout pendant la nuit.
